(19) Europäisches Patentamt
European Patent Office
Office européen des brevets

(11) **EP 4 258 671 A1**

(12) **EUROPEAN PATENT APPLICATION**
published in accordance with Art. 153(4) EPC

(43) Date of publication:
**11.10.2023 Bulletin 2023/41**

(21) Application number: **21902357.9**

(22) Date of filing: **18.11.2021**

(51) International Patent Classification (IPC):
**H04N 19/597** $^{(2014.01)}$    **G06T 9/00** $^{(2006.01)}$

(52) Cooperative Patent Classification (CPC):
**G06T 9/001; G06T 9/004**

(86) International application number:
**PCT/CN2021/131346**

(87) International publication number:
**WO 2022/121650 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.12.2020 CN 202011439503**

(71) Applicant: **Tencent Technology (Shenzhen)
Company Limited
Shenzhen, Guangdong 518057 (CN)**

(72) Inventor: **ZHU, Wenjie
Shenzhen, Guangdong 518057 (CN)**

(74) Representative: **Eisenführ Speiser
Patentanwälte Rechtsanwälte PartGmbB
Postfach 31 02 60
80102 München (DE)**

(54) **POINT CLOUD ATTRIBUTE PREDICTING METHOD, ENCODER, DECODER, AND STORAGE MEDIUM**

(57) The present application provides a point cloud attribute predicting method, an encoder, a decoder, and a storage medium. In a point cloud attribute predicting process, different target neighbor point selection strategies are designed according to distribution conditions of repeated points, at least one target neighbor point of a target point is determined, and attribute prediction is performed on the target point according to reconstruction attribute information of the at least one target neighbor point, so that the efficiency and accuracy of point cloud attribute prediction are improved.

```
┌─────────────────────────────────────────────┐
│ Acquire one or more encoded points, of which │
│ a quantity is N and which are closest to a    │──── S401
│ target point, among points in point-cloud     │
│ data as one or more adjacent points of the    │
│ target point                                   │
└─────────────────────────────────────────────┘
                      ↓
┌─────────────────────────────────────────────┐
│ Acquire one or more first adjacent points of  │
│ which a quantity is K from the one or more    │──── S402
│ adjacent points, where the one or more first  │
│ adjacent points comprises overlapping points, │
│ of which a quantity is M and which are        │
│ identical in a position                        │
└─────────────────────────────────────────────┘
                      ↓
┌─────────────────────────────────────────────┐
│ Determine one or more target adjacent points  │
│ of the target point according to the          │──── S403
│ overlapping points                             │
└─────────────────────────────────────────────┘
                      ↓
┌─────────────────────────────────────────────┐
│ Predict an attribute of the target point      │
│ according to a reconstructed attribute of the │──── S404
│ one or more target adjacent points            │
└─────────────────────────────────────────────┘
```

Figure 4

EP 4 258 671 A1

## Description

This application claims priority to Chinese Patent Application No. 202011439503.0, entitled "METHOD FOR PREDICTING POINT-CLOUD ATTRIBUTE, ENCODER, DECODER, AND STORAGE MEDIUM" filed with the China National Intellectual Property Administration on December 07, 2020, which is incorporated herein by reference in its entirety.

FIELD OF THE TECHNOLOGY

Embodiments of the present disclosure relate to the technical field of video encoding and decoding, and in particular, to point-cloud attribute prediction.

BACKGROUND OF THE DISCLOSURE

A collecting device detects a surface of an object to form point-cloud data, which comprises hundreds of thousands of points, or even more, for expressing an attribute of the surface of the object. The point-cloud data is transmitted as a point-cloud media file between a video production device and a video playback device during video production. Such a mass of points brings a challenge to the transmission, so that the video production device needs to compress the point-cloud data before the transmission.

The compression of the point-cloud data mainly includes compressing position information and compressing attribute information. When compressing the attribute information, redundant information among the point-cloud data is reduced or eliminated through prediction. For example, one or more adjacent points of a target point are acquired from points which have been encoded, and an attribute of the target point is predicted according to attributes of the adjacent point(s).

SUMMARY

A method for predicting a point-cloud attribute, an encoder, a decoder, and a storage medium are provided according to embodiments of the present disclosure provides. Efficiency of point-cloud attribute prediction is improved.

In a first aspect, a method for predicting a point-cloud attribute is provided according to embodiments of the present disclosure. The method is executable by an encoding device, and comprises: acquiring one or more encoded points, of which a quantity is N and which are closest to a target point, among points in point-cloud data as one or more adjacent points of the target point; acquiring one or more first adjacent points of which a quantity is K from the one or more adjacent points, where the one or more first adjacent points comprise overlapping points, of which a quantity is M and which are identical in a position; determining one or more target adjacent points of the target point according to the overlapping points; and predicting an attribute of the target point according to a reconstructed attribute of the one or more target adjacent points. N, K, and M each is a positive integer greater than or equal to 1.

In a second aspect, another method for predicting a point-cloud attribute is provided according to embodiments of the present disclosure. The method comprises: parsing a coded stream to obtain a position of each point in point-cloud data; acquiring one or more decoded points, of which a quantity is N and which are closest to a target point, among points in the point-cloud data according to the position of each point in the point-cloud data, as one or more adjacent points of the target point; acquiring one or more first adjacent points of which a quantity is K from the one or more adjacent points, where the one or more first adjacent points comprise overlapping points, of which a quantity is M and which are identical in the position; determining one or more target adjacent points of the target point according to the overlapping points; and predicting an attribute of the target point according to a reconstructed attribute of the one or more target adjacent points. N, K, and M each is a positive integer greater than or equal to 1.

In a third aspect, an encoder is provided. The encoder is configured to perform the method according to the first aspect or implementations of the first aspect. Specifically, the encoder comprises functional modules configured to perform the method according to the first aspect or implementations of the first aspect.

In a fourth aspect, a decoder is provided. The decoder is configured to perform the method according to the second aspect or implementations of the second aspect. Specifically, the encoder comprises functional modules configured to perform the method according to the second aspect or implementations of the second aspect.

In a fifth aspect, another encoder is provided, comprising a processor and a memory. The memory is configured to store a computer program, and the processor is configured to invoke and execute the computer program stored in the memory to perform the method according to the first aspect or implementations of the first aspect.

In a sixth aspect, another decoder is provided, comprising a processor and a memory. The memory is configured to store a computer program, and the processor is configured to invoke and execute the computer program stored in the memory to perform the method according to the second aspect or implementations of the second aspect.

In a seventh aspect, a codec system is provided, comprising the encoder according to either the second aspect or the fifth aspect, or implementations of such aspect, and the decoder according to either the third aspect or the sixth aspect, or implementations of such aspect.

In an eighth aspect, a chip is provided. The chip is configured to implement the method according to either the first aspect or the second aspect, or implementations of such aspect. Specifically, the chip comprises a processor, configured to invoke a computer program from a memory and execute the computer program to cause a device, on which the chip is installed, to perform the method according to either the first aspect or the second aspect, or implementations of such aspect.

In a ninth aspect, a computer-readable storage medium is provided. The computer-readable storage medium is configured to store a computer program which causes a computer to perform the method according to either the first aspect or the second aspect, or implementations of such aspect.

In a tenth aspect, a computer program product is provided. The computer program comprises computer program instructions which cause a computer to perform the method according to either the first aspect or the second aspect, or implementations of such aspect.

In an eleventh aspect, a computer program is provided. The computer program when executed on a computer causes the computer to perform the method according to either the first aspect or the second aspect, or implementations of such aspect.

According to embodiments of the present disclosure, during point-cloud attribute prediction, different policies for selecting the target adjacent point(s) are determined according to distribution of the overlapping point(s). Accordingly, one or more target adjacent points of the target point are determined, and the attribute of the target point is predicted according to a reconstructed attribute of the one or more target adjacent points. Thereby, efficiency and accuracy of point-cloud attribute prediction are improved.

BRIEF DESCRIPTION OF THE DRAWINGS

Figure 1 is a schematic block diagram of a point-cloud video codec system according to an embodiment of the present disclosure.

Figure 2 is a schematic block diagram of an encoding framework according to an embodiment of the present disclosure.

Figure 3 is a schematic block diagram of a decoding framework according to an embodiment of the present disclosure.

Figure 4 is a flowchart of a method for predicting a point-cloud attribute according to an embodiment of the present disclosure.

Figure 5A is a schematic diagram of a sequence in a point-cloud according to an original Morton order.

Figure 5B is a schematic diagram of a sequence in a point-cloud according to an offset Morton order.

Figure 5C is a schematic diagram of a spatial relationship among adjacent points of a target point.

Figure 5D is a schematic diagram of a relationship of Morton codes between coplanar adjacent points and a target point.

Figure 5E is a schematic diagram of a relationship of Morton codes between collinear adjacent points and a target point.

Figure 6 is a flowchart of a method for predicting a point-cloud attribute according to another embodiment of the present disclosure.

Figure 7 is a schematic block diagram of an encoder according to an embodiment of the present disclosure.

Figure 8 is a schematic block diagram of a decoder according to an embodiment of the present disclosure.

Figure 9 is a schematic block diagram of an electronic device according to an embodiment of the present disclosure.

DESCRIPTION OF EMBODIMENTS

Hereinafter technical solutions in embodiments of the present disclosure are described in conjunction with the drawings for embodiments of the present disclosure.

Herein a term "B corresponding to A" indicates that B is associated with A. As an implementation, B is determined according to A. Moreover, determining B according to A does not mean that B is determined according to only A, but may be determined according to A and/or other information.

Herein "multiple" means a quantity of two or more, unless otherwise defined.

Herein terms such as "first" and "second" are used to distinguish identical or similar items having substantially the same functions and effects, in order to clarify technical solutions in embodiments of the present disclosure. Those skilled in the art can appreciate that the terms "first", "second", and the like do not limit a quantity and an execution order, and do not indicate that the concerning items must be different. Hereinafter concepts relevant to embodiments of the present disclosure are briefly introduced first to facilitate understanding of the present disclosure.

A point cloud refers to a set of discrete points, which are arbitrarily distributed in a space and configured to represent a spatial structure and a surface attribute of a three-dimensional (3D) object or a 3D scene.

Point-cloud data refers a specific form of recording the point-cloud. Points in the point-cloud may have information concerning positions and attributes of the points. For example, the position of a point may be 3D coordinates of the point, and may be called geometry information of the point. For example, the attribute of a point may comprise a color and/or a reflectivity, or the like. For example, the color may be expressed in any color space, such as RGB or luma-chroma format (YCbCr, or YUV). For example, Y represents luminance (luma), Cb or U represents a blue color difference, Cr or V represents red, and U and V represent chrominance (chroma) for describing color differences. As an example, a point cloud is obtained through laser measurement, and a point in the point-cloud may have 3D coordinates of the point and a laser reflectance of the points. As another example, a point cloud is obtained through photogrammetry, and a point in the point-cloud may have 3D coordinates of the point and a color of the point. As yet another example, a point cloud is obtained through a combination of the laser measurement and the photogrammetry, and a point in the point-cloud may have 3D coordinates of the, a laser reflectance of the point, and a color of the point.

A manner for acquiring the point-cloud data may include, but is not limited to, at least one of the following means. (1) Generation via a computer device. The computer device may generate the point-cloud data according to a virtual 3D object and a virtual 3D scene. (2) Acquisition through 3D laser scanning. The point-cloud data of a statistic 3D object or a statistic 3D scene in the real world can be obtained through 3D laser scanning, and the point-cloud data may be acquired in millions of points per second. (3) Acquisition through 3D photogrammetry. A visual scene of the real world is acquired via a 3D photography device (that is, a set of cameras or a camera device with multiple lenses and multiple sensors) to obtain the point-cloud data of the visual scene, and point-cloud data of a dynamic 3D object or a dynamic 3D scene in the real world can be obtained through the 3D photography. (4) Acquisition of point-cloud data of a biological tissue/organ via a medical device. In the medical field, the point-cloud data of a biological tissue and a biological organ may be acquired via a medical device through magnetic resonance imaging (MRI), computed tomography (CT), and electromagnetic tracking, or the like.

The point clouds can be categorized into dense point-clouds and sparse point-clouds according to a means of acquisition.

The point-clouds can be categorized into a first type of statistic point clouds, a second type of dynamic point clouds, and a third type of dynamically acquired point clouds according to a temporal sequence.

In the first type, the object is stationary, and the device for acquiring the point cloud is also stationary.

In the second type, the object is moving, and the device for acquiring the point-cloud is stationary.

In the third type, the device for acquiring the point-cloud is moving.

The point-clouds can be categorized into two types according to usage.

One type is point-clouds for machine perception. These point-clouds may be applied to autonomous navigation systems, real-time inspection systems, geographic information systems, visual sorting robots, emergency rescue robots, and other scenarios.

The other type is point-clouds for human visual perception. These point-clouds may be applied to digital cultural heritage, free viewpoint broadcasting, 3D immersive communications, 3D immersive interaction, and other scenarios.

Overlapping points refer to multiple points having identical positions due to settings of an acquisition means, or due to an application requirement of transmission and/or presentation. The attributes of the overlapping points may be identical or different.

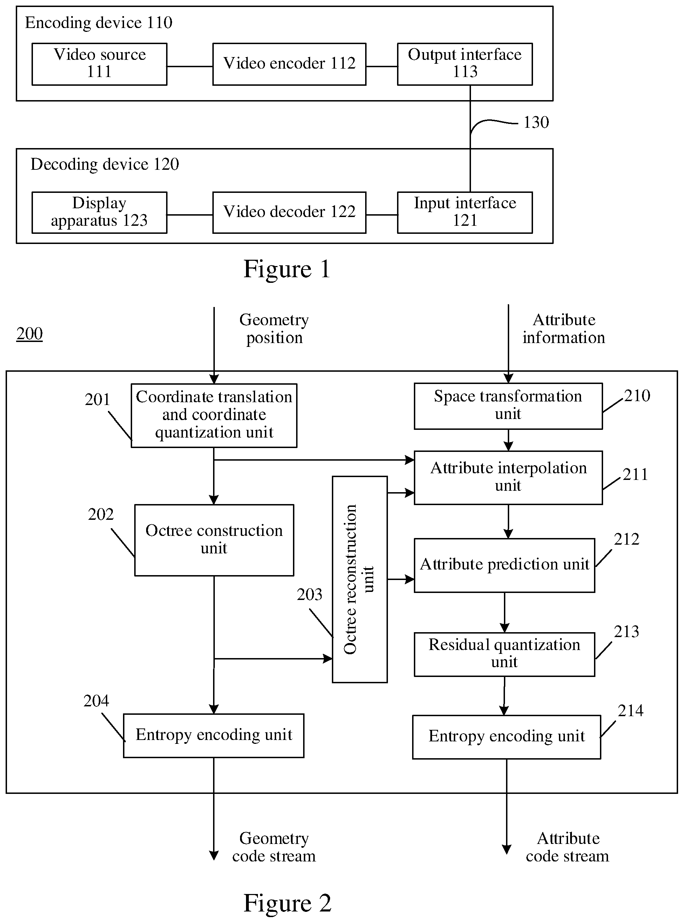

Figure 1 is a schematic block diagram of a point-cloud video codec system according to an embodiment of the present disclosure. Figure 1 is merely an example, and the point-cloud video codec system in embodiments of the present disclosure includes, but is not limited to, the structure as shown in Figure 1. As shown in Figure 1, the point-cloud video codec system 100 comprises an encoding device 110 and a decoding device 120. The encoding device is configured to encode (or compress) point-cloud data to generate a coded stream, and transmit the coded stream to the decoding device. The decoding device decodes the coded stream, which is generated through encoding by the encoding device, to obtain decoded point-cloud data.

Herein the encoding device 110 may be a device having a video encoding function, and the decoding device 120 may be a device having a video decoding function. For example, the encoding device 110 or the decoding device 120 may include a smart phone, a desktop computer, a mobile computing device, a notebook (e.g., laptop) computer, a tablet computer, a set-top box, a television, a camera, a display apparatus, a digital media player, a video game console, or an in-vehicle computer.

In some embodiments, the encoding device 110 may transmit the encoded point-cloud data (for example, a coded stream) to the decoding device 120 via a channel 130. The channel 130 may include one or more media and/or apparatuses capable of transmitting the encoded point-cloud data from the encoding device 110 to the decoding device 120.

In one example, the channel 130 includes one or more communication media that enable the encoding device 110 to transmit the encoded point-cloud data directly to the decoding device 120 in real time. The encoding device 110 may modulate the encoded point-cloud data according to a communication standard and transmit the modulated point-cloud data to the decoding device 120. The communication medium includes a wireless communication medium, such as a radio frequency spectrum. Optionally, the communication medium may include a wired communication medium, such as one or more physical transmission lines.

In another example, the channel 130 includes a storage medium. The storage medium may store the point-cloud data encoded by the encoding device 110. The storage medium includes a variety of locally accessible data storage media, such as an optical disc, a DVD, and a flash memory. The decoding device 120 may acquire the encoded point-cloud data from the storage medium.

In another example, the channel 130 may include a storage server. The storage server may store the point-cloud data encoded by the encoding device 110. The decoding device 120 may download the stored encoded point-cloud data from the storage server. Optionally, the storage server may store the encoded point-cloud data and may transmit the encoded point-cloud data to the decoding device 120. The storage server may be a web server (for example, for a website), a file transfer protocol (FTP) server, or the like.

In some embodiments, the encoding device 110 comprises a video encoder 112 and an output interface 113. The output interface 113 may comprise a modulator/demodulator (modem) and/or a transmitter.

In some embodiments, besides the video encoder 112 and the output interface 113, the encoding device 110 may comprise a video source 111.

The video source 111 may comprise at least one of: a video acquisition apparatus (for example, a video camera), a video archive, a video input interface, and a computer graphics system. The video input interface is configured to receive point-cloud data from a video content provider, and the computer graphics system is configured to generate point-cloud data.

The video encoder 112 encodes the point-cloud data coming from the video source 111 to generate a coded stream. The video encoder 112 transmits the encoded point-cloud data directly/indirectly to the decoding device 120 via the output interface 113. The encoded point-cloud data may be stored on a storage medium or a storage server for subsequent reading by the decoding device 120.

In some embodiments, the decoding device 120 comprises an input interface 121 and a video decoder 122.

In some embodiments, besides the input interface 121 and the video decoder 122, the decoding device 120 may further comprise a display apparatus 123.

The input interface 121 comprises a receiver and/or a modem. The input interface 121 may receive the encoded point-cloud data via the channel 130.

The video decoder 122 is configured to decode the encoded point-cloud data to obtain decoded point-cloud data, and transmit the decoded point-cloud data to the display apparatus 123.

The display apparatus 123 displays the decoded point-cloud data. The display apparatus 123 may be integrated in the decoding device 120 or outside of the decoding device 120. The display apparatus 123 may include various types of display apparatuses, such as a liquid crystal display (LCD), a plasma display, an organic light-emitting diode (OLED) display, or a display apparatus of another type.

In addition, Figure 1 is merely exemplary, and technical solutions in embodiments of the present disclosure are not limited to Figure 1. For example, the solutions of the present disclosure may be applied to a single side of video encoding or video decoding.

The point-cloud is a set of massive points, and hence storing the point cloud not only consumes a lot of memory but also causes difficulties in transmission. There is no adequate bandwidth that supports transmitting the point cloud directly in the network layer without compression. Therefore, the compression on the point cloud is necessary.

In conventional technology, the point clouds are compressed through a framework of point-cloud encoding.

The point-cloud encoding framework may be the geometry point-cloud compression (G-PCC) codec framework or the video point-cloud compression (V-PCC) codec framework provided by the moving picture experts group (MPEG), or may be the audio-video-standard-PCC (AVS-PCC) codec framework provided by the audio video standard (AVS) organization. Both the G-PCC and the AVS-PCC are for static sparse point-clouds, and their encoding frameworks are substantially the same. The G-PCC codec framework may be used for compressing the first type of static point-clouds and the third type of dynamically acquired point-clouds, and the V-PCC codec framework may be used for compressing the second type of dynamic point-clouds. The G-PCC codec framework is also called point-cloud codec TMC13, and the V-PCC codec framework is also called point-cloud codec TMC2.

Hereinafter the G-PCC codec framework is taken as an example for illustrating the codec framework applicable to embodiments of the present disclosure.

Figure 2 is a schematic block diagram of an encoding framework according to an embodiment of the present disclosure.

As shown in Figure 2, the encoding framework 200 may acquire a position (i.e., position information, which is also called as geometry information or a geometry position) and an attribute (i.e., attribute information) of point-cloud from an acquisition device. Encoding of the point-cloud comprises position encoding and attribute encoding.

The position encoding comprises following steps. The original point-cloud is preprocessed, for example, subject to coordinate transformation, coordinate quantization, and removal of overlapping points. An octree is established, and then encoding is performed to generate a geometry coded stream.

The attribute encoding comprises following steps. One of three prediction modes is selected based on the given reconstructed position and the given attribute of the inputted point-cloud. A result of prediction is quantized and then subject to arithmetic coding, so as to generate an attribute coded stream.

As shown in Figure 2, the position encoding may be implemented through a coordinate translation-quantization unit 201, an octree construction unit 202, an octree reconstruction unit 203, and an entropy encoding unit 204.

The coordinate translation-quantization unit 201 may be configured to transform world coordinates of the points in the point-cloud into relative coordinates and quantize the relative coordinates, such that a quantity of coordinate positions is reduced. The quantization may assign identical coordinates to different original points.

The octree construction unit 202 may encode positions of the quantized points in a manner of octree encoding. For example, the point cloud is partitioned through an octree, and thereby positions of the points may be in one-to-one correspondence to positions in the octree. The positions in the octree which have point(s) is counted and flagged as 1, in order to implement geometry encoding.

The octree reconstruction unit 203 is configured to reconstruct the geometry positions of the points in the point-cloud to obtain reconstructed geometry positions of the points.

The entropy encoding unit 204 may perform arithmetic coding on the positions outputted by the octree construction unit 202 through entropy encoding, that is, generate the geometry coded stream through arithmetic coding based on the positions outputted by the octree construction unit 202. The geometry coded stream may also be called a geometry bitstream.

The attribute encoding may be implemented through a space transformation unit 210, an attribute interpolation unit 211, an attribute prediction unit 212, a residual quantization unit 213, and an entropy encoding unit 214.

The space transformation unit 210 may be configured to transform an RGB color space for the points in the point cloud into the YCbCr format or another format.

The attribute interpolation unit 211 may be configured to transform the attributes of the points in the point-cloud to minimize attribute distortion. For example, the attribute interpolation unit 211 may be configured to obtain an actual value of the attribute of a point. For example, the attribute may be a color of the point.

The attribute prediction unit 212 may be configured to predict the attributes of the points in the point-cloud to obtain the predicted value of the attribute of the point, and then obtain a residual of the attribute of the point based on the predicted value. For example, the residual of the attribute of the point may be obtained by subtracting the predicted value from the real value of the attribute of the point.

The residual quantization unit 213 may be configured to quantize the residual of the attribute of the point.

The entropy encoding unit 214 may perform entropy encoding on the residual of the attribute of the point through zero run length coding, so as to obtain an attribute coded stream. The attribute coded stream may be a bitstream.

Reference is made to Figure 2. Herein the geometry encoding may comprise following main operations and processing.

(1) Pre-processing including transforming coordinates and voxelization. The point-cloud data in the 3D space is transformed into an integer form through zooming and translation, and the minimum geometry position among the point-cloud data is positioned at an original of a coordinate system.

(2) Geometry encoding includeing two modes applicable to different conditions.

(a) One mode is octree-based geometry encoding. The octree is a tree-shaped data structure. The 3D space partition comprises dividing a preset bounding box evenly, where each node has eight child nodes. Whether each child node of the octree is occupied is signaled by using '1' and '0', so as to obtain an occupancy code which serves as a coded stream of the geometry information of the point cloud.

(b) The other mode is trisoup-based geometry encoding. The point cloud is divided into blocks of a certain size, intersections between a surface of the point cloud and edges of the blocks are positioned, and triangles are constructed. Positions of the intersections are encoded to compress the geometry information.

(3) Geometry quantization. Fineness of the quantization is generally determined by a quantization parameter (QP). A larger QP indicates that coefficients within a larger range would be quantized into identical outputs, and hence usually leads to a greater distortion and a lower bitrate. On the contrary, a smaller QP indicates that coefficients with a smaller range would be quantized into identical outputs, and hence usually leads to a smaller distortion and a higher bitrate. When encoding the point cloud, the quantization is performed directly on the coordinates of the points.

(4) Geometry entropy encoding. Statistical compression/encoding is performed on the occupancy code of the octree to obtain a final binarized (values being either 0 or 1) compressed coded stream. The statistical encoding is lossless encoding that can reduce the code rate effectively when representing the same signal. A common statistical encoding is the content adaptive binary arithmetic coding (CABAC).

The attribute encoding comprises following main operations and processing.

(1) Recoloring. In case of lossy encoding, the encoding side needs to decode and reconstruct the geometry information after encoding the geometry information, that is, restore the coordinates of each point in the 3D point cloud. The attributes corresponding to one or more adjacent points in the original point-cloud are fetched as the attribute of a reconstructed point.

(2) Prediction. During the prediction, one or more points are selected based adjacency in geometry or in attributes to obtain predicted values, a weighted average of the predicted values is calculated to obtain a final predicted attribute, and a difference between an actual attribute and the predicted attribute is encoded.

(3) Transform. There are three modes of the transform, which are applicable to different conditions.

(a) A first mode is predicting transform. Subsets of points are established according to distances, such that the point cloud is divided into multiple layers (level of detail, LoD) to achieve point-cloud representations from coarse to fine. Bottom-top prediction can be adopted between adjacent layers. That is, the attributes of a point introduced in a finer layer is predicted based an adjacent point in a coarser layer, and a corresponding residual signal is obtained. Points in the bottommost layer are encoded as a reference.

(b) A second mode is lifting transform. On a basis of the adjacent layer prediction of LoDs, the weight updating policy for neighboring points is introduced to obtain the predicted attribute of each point, and thereby obtain the corresponding residual signal.

(c) A third mode is region adaptive hierarchical transform (RAHT). The attributes are subject to RAHT, such that a signal is converted into a transform domain. The result is called a transform coefficients.

(4) Attribute quantization. Fineness of the quantization is generally determined by the QP. The residues are quantized and then subject to entropy encoding in case of the predicting transform and the lifting transform. The transform coefficients are quantized and then subject to entropy encoding in case of the RAHT.

(5) Attribute entropy coding. The quantized attribute residuals or transform coefficients are generally subject to the run length coding and the arithmetic coding to implement final compression. Correspondingly, the QP and other information are also encoded through an entropy encoder.

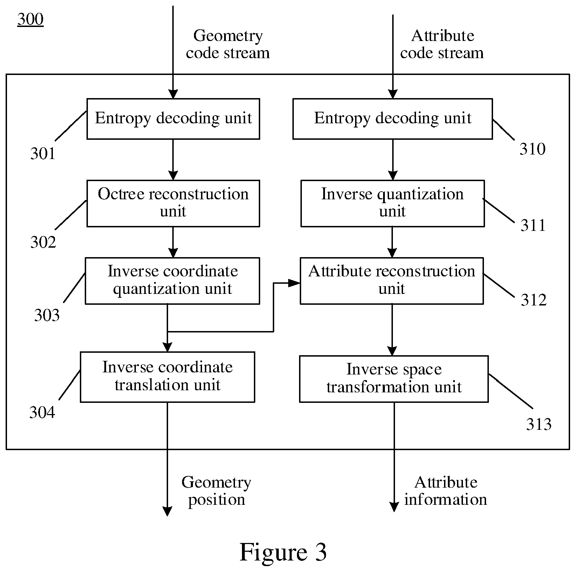

Figure 3 is a schematic block diagram of a decoding framework according to an embodiment of the present disclosure.

As shown in Figure 3, the decoding framework 300 may obtain a coded stream of a point cloud from an encoding device, and parse the coded stream to obtain positions and attributes of points in the point cloud. Decoding of the point-cloud includes position decoding and attribute decoding.

EP 4 258 671 A1

The position decoding comprises followings steps. Arithmetic decoding is performed on a geometry coded stream. An octree is constructed to incorporate the points, and the positions of the points are reconstructed to obtain reconstructed positions of the points. Coordinate transformation is performed on the reconstructed positions of the points to obtain the positions of the points. The positions of the points may be called geometry information of the points.

The attribute decoding comprises following steps. An attribute coded stream is parsed to obtain residuals of attributes of points in the point-cloud. The residuals of the attributes of the points are inverse-quantized to obtain inverse-quantized residuals of the attributes of the points. One of the three prediction modes is selected based on the reconstructed positions of the points, which are obtained through the position decoding, to perform point-cloud prediction and thereby obtain reconstructed attributes of the points. Inverse color-space transform is performed on the reconstructed attributes of the points to obtain a decoded point cloud.

As shown in Figure 3, the position decoding may be implemented through an entropy decoding unit 301, an octree reconstruction unit 302, an inverse coordinate quantization unit 303, and an inverse coordinate translation unit 304.

The attribute encoding may be implemented through an entropy decoding unit 310, an inverse quantization unit 311, an attribute reconstruction unit 312, and an inverse space transformation unit 313.

Decompression is an inverse process of the compression. Similarly, a function of each unit in the decoding framework 300 may refer a function of a corresponding unit in the encoding framework 200.

At the decoding side, after obtaining a compressed coded stream, the decoder first performs entropy decoding to obtain various modes, quantized geometry information, and quantized attributes. First, the quantized geometry information is inverse-quantized to obtain reconstructed positions of the 3D points. On the other hand, the quantized attribute information is inverse-quantized to obtain residuals, and a reference signal is determined according to the adopted mode of transform, so as to obtain reconstructed attributes. The reconstructed attributes are aligned with the geometry information based on a sequence, so as to output reconstructed point-cloud data.

For example, the decoding framework 300 may divide the point-cloud into multiple LoDs according to the Euclidean distance among the points in the point-cloud, and then decode the encoded attributes of the points in the LoD in sequence. For example, a quantity of zeros (zero_cnt) is counted in the zero run length coding, such that the residuals are decoded based on zero_cnt. Afterwards, the decoding framework 300 may perform inverse quantization based on a decoded residual, and add the residual, which is obtained through the inverse quantization, to a predicted attribute of a target point to obtain a reconstructed attribute of the point cloud. The above process is repeated until the whole point cloud has been decoded. The target point would serve as a nearest neighbor of a subsequent point in the LoDs, and the reconstructed attribute of the target point is used to predict the attribute of the subsequent point.

In the MPEG and the AVS, there are multiple datasets comprising overlapping points, and a proportion of overlapping points may range from 10% to 50%. The overlapping points identical in a position may appear in the point-cloud data. In conventional technology, a method for predicting attributes does not consider an influence of the overlapping points during prediction, especially in lossless encoding, which results in low prediction efficiency. A method for predicting a point-cloud attribute is provided according to embodiments of the present disclosure. During the prediction, the method provides different policies for selecting adjacent points according to distribution of the overlapping points, which improves efficiency of predicting the point-cloud attribute.

Hereinafter technical solutions of the present disclosure are described in detail.

First, an encoding side is taken as an example to illustrate a method for predicting a point-cloud attribute according to embodiments of the present disclosure.

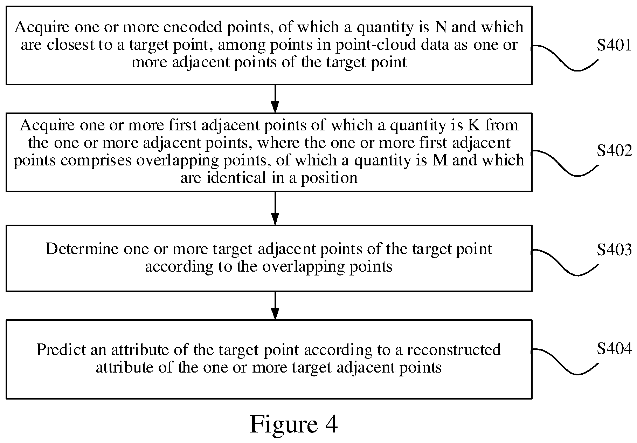

Figure 4 is a flowchart of a method for predicting a point-cloud attribute according to an embodiment of the present disclosure. The method may be executed by the foregoing encoding device, for example, the encoding device 110. As shown in Figure 4, the method comprises following steps S401 to S404.

In step S401, one or more encoded points, of which a quantity is N and which are closest to a target point, are acquired among points in point-cloud data as one or more adjacent points of the target point.

Herein the attributes of the point loud are encoded after the positions of the point cloud are encoded.

In some embodiments, adjacent points each of which an attribute has been encoded (i.e., encoded adjacent point) are acquired from in the point-cloud data, and a distance between each encoded adjacent point and the target point is calculated. N adjacent point(s), each having the distance within a predetermined distance range, are selected from all encoded adjacent points according to the distances and thereby serve as the N adjacent point(s) (i.e., the foregoing one or more adjacent points) of the target point. After comparing the distances, the N adjacent point(s) within the predetermined distance range refer to the N adjacent point(s) having the smallest N distance(s), respectively, to the target point. The target point is one of the points comprised in the point-cloud data.

The attribute of the target point comprises a color and/or a reflectivity.

In some embodiments, the attribute of the target point is a reflectivity, and the step S401 comprises, but is not limited to, following manners.

In a first manner, the N adjacent point(s) of the target point may be selected using the Morton order when predicting the reflectivity of the target point. Specifically, the first manner comprises following steps.

8

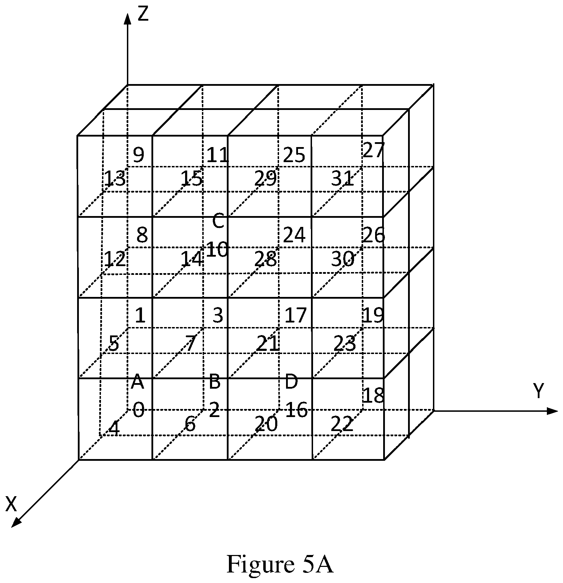

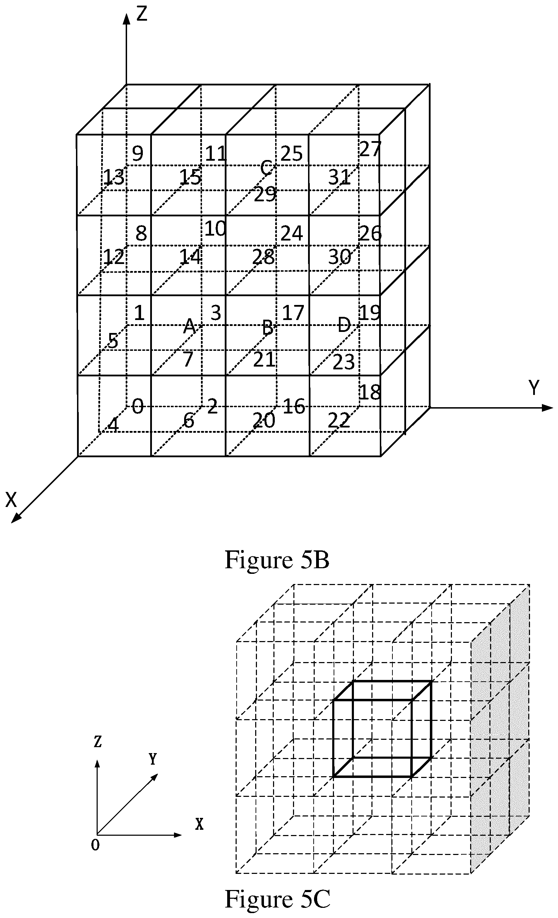

Coordinates of all points in the point-cloud data are obtained, and are sequenced according to the Morton order to obtain Morton sequence 1, as shown in Figure 5A.

Then, a fixed offset (j1, j2, j3) is added to the coordinates (x, y, z) of all point-clouds, and the new coordinates (x+j1, y+j2, z+j3) are used to generate Morton codes of the points, so as to obtain Morton sequence 2 according the Morton order, as shown in Figure 5B. Comparing Figure 5B with Figure 5A, points A, B, C, and D are moved to new positions, the corresponding Morton codes are also changed, but their relative positions remain unchanged. As shown in Figure 5B, the Morton code of point D is 23, and the Morton code of its adjacent point B is 21, so that point B can be found by tracking 2 points at most forward from point D. In comparison, as shown in Figure 5A, point B (of which the Morton code is 2) can only be found by tracking at most 14 points forward from point D (of which the Morton code is 16).

The prediction point(s) closest to the target point are fetched according to the Morton codes. N1 encoded point(s) directly previous to the target point are selected from Morton order 1 as N1 adjacent point(s) of the target point, where N1 is greater than or equal to 1. N2 encoded point(s) directly previous to the target point are selected from Morton order 2 as N2 adjacent point(s) of the target point, where N2 is greater than or equal to 1 and N1+N2=N. Thereby, N adjacent point(s) of the target point are obtained.

Optionally, in PCEM software, j1=j2=j3=42, and N1=N2=4.

In a second manner, the one or more encoded points, of which a quantity is equal to maxNumOfNeighbours and is directly previous to the target point in the Hilbert order, are computed and serve as the N adjacent point(s) of the target point.

Optionally, a default value of maxNumOfNeighbours is 128.

In some embodiments, the attribute of the target point is the color, and the step S401 comprises a following manner.

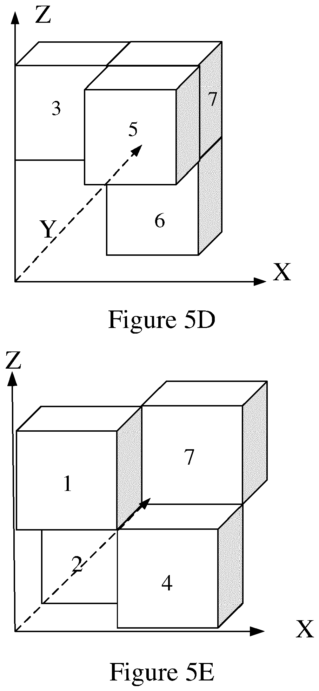

Figure C shows a spatial relationship among the adjacent points and the target point, where the solid line box represents the target point. It is assumed that a search range of the adjacent points is $3\times3\times3$ neighborhood of the target point. First, the Morton code of the target point is used to obtain a block having the smallest Morton code value among the $3\times3\times3$ neighborhood, and such block serves a reference block. Encoded adjacent points that are either coplanar or collinear with the target point are fetched by using the reference block. A relationship of Morton codes among coplanar adjacent points in the neighborhood range and the target point is as shown in Figure 5D. A relationship of Morton codes among collinear adjacent points in the neighborhood range and the target point is as shown in Figure 5E.

The reference block is used to search for the N encoded adjacent point(s) that are either coplanar or collinear with the target point. The attribute of the target point is predicted by using the N adjacent point(s).

In a case that there is no encoded adjacent point which is coplanar or collinear with the target point, the attribute is predicted by a point directly previous to the target point in Morton codes.

In step S402, one or more first adjacent points of which a quantity is K are acquired from the one or more adjacent points, where the one or more first adjacent points comprises overlapping points, of which a quantity is M and which are identical in a position.

In one embodiment, the K first adjacent point(s) (i.e., the foregoing one or more first adjacent points) are randomly obtained from the N adjacent point(s).

In another embodiment, a distance d between each of the N adjacent point(s) and the target point is calculated according to a position of such adjacent point and a position of the target point. For example, the coordinates of the target point are (x, y, x), the coordinates of a candidate point are (x1, y1, z1), and thereby the distance d is calculated through d=|x-x1|+|y-y1|+|z-z1|. Herein the distance between each adjacent point and the target point may be calculated in another manner. The K adjacent point(s) having the smallest distance(s) d among the N adjacent point(s) serve as the K first adjacent point(s). M overlapping points (i.e., the foregoing overlapping points) having identical positions are among the K first adjacent point(s).

In step S403, one or more target adjacent points of the target point is determined according to the overlapping points.

In relevant techniques, the attribute of the target point is predicted by using the K first adjacent point(s), which are obtained in S403 and serve as the target adjacent points of the target point. Herein an influence of the M overlapping points among the K first adjacent point(s) on attribute prediction of the target point is considered. The one or more target adjacent points of the target point is determined based on the M overlapping points, in order to improve efficiency of the attribute prediction of the target point.

In this step, determining the one or more target adjacent points of the target point according to the M overlapping points includes, but is not limited to, following implementations.

In a first implementation, the step S403 comprises steps S403-A1 and S403-A2.

In step S403-A1, a third adjacent point is determined from the M overlapping points.

In step S403-A2, the third adjacent point serves as one of the one or more target adjacent points of the target point.

The third adjacent point may be an arbitrary one of the M overlapping points. The positions of the M overlapping points are identical while the attributes thereof may be either identical or different. Hence, the attribute of the third adjacent point may be determined in following manners.

In one manner, the attribute of an arbitrary one of the M overlapping points serves as the attribute of the third adjacent point.

In another manner, an average of the attributes of all the M overlapping points serves as the attribute of the third adjacent point.

Herein, in some embodiments, the video encoder may further determine K-M first adjacent point(s), which are other than the M overlapping points, from the K first adjacent points as K-M target adjacent point(s) of the target point.

Moreover, in order to obtain target adjacent points of which a total quantity is K for the target point, the method further comprises following steps S403-A3 and S403-A4.

In step S403-A3, M-1 second adjacent point(s) is selected from the N adjacent points, where each second adjacent point is not comprised in the K first adjacent points.

In step S403-A4, the M-1 second adjacent point(s) serve as M-1 target adjacent point(s) of the target point.

In other words, the M-1 second adjacent point(s) are selected from the remaining adjacent point(s) other than the K first adjacent points among the N adjacent points, and the M-1 second adjacent point(s) serve as the M-1 target adjacent point(s) of the target point. The M-1 second adjacent point(s) may or may not comprise overlapping points, which is not limited herein.

The step S403-A3 may be implemented through, but is not limited to, following manners.

In a first manner, M-1 adjacent point(s) are randomly selected from the N-K adjacent point(s), which are other than the K first adjacent points among the N adjacent points, as the second adjacent point(s).

In a second manner, M-1 adjacent point(s) closest to the target point are selected from N-K adjacent point(s) as the M-1 second adjacent point(s), where the N-K adjacent point(s) are adjacent points other than the K first adjacent point(s) among the N adjacent points.

In a second implementation, each point in the point-cloud data has temporal information, and the step S403 comprises step S403-B1.

In step S403-B1, P overlapping point(s) identical to the target point in the temporal information are selected from the M overlapping points as target adjacent point(s) of the target point, where P is a positive integer.

On a basis of the step S403-B1, in order to obtain target adjacent points of which a total quantity is K for the target point, the method may further comprise step S403-B2.

In step S403-B2, M-P fourth adjacent point(s) are selected from the N adjacent points as M-P target adjacent point(s) of the target point, where each fourth adjacent point is not comprised in the first adjacent point(s).

In other words, the M-P fourth adjacent point(s) are selected from the remaining adjacent point(s) other than the K first adjacent points in the N adjacent points, and the M-P fourth adjacent point(s) serve as the M-P target adjacent point(s) of the target point. The M-P fourth adjacent point(s) may or may not comprise overlapping points, which is not limited herein.

The step S403-B2 may be implemented through, but is not limited to, following manners.

In a first manner, M-P adjacent point(s) are randomly selected from N-K adjacent point(s) other than the K first adjacent points among the N adjacent points as the fourth adjacent point(s).

In a second manner 2, M-P adjacent point(s) closest to the target point are selected from N-K adjacent point(s) as the M-P fourth adjacent point(s), where the N-K adjacent point(s) are adjacent point(s) other than the K first adjacent points among the N adjacent points.

In a third implementation, the step S403 comprises step S403-C1.

In step S403-C1, first adjacent point(s) other than the M overlapping points among the K first adjacent points serve as K-M target adjacent point(s) of the target point. In other words, the M overlapping points are discarded.

On a basis of the step S403-C1, the method may further include step S403-C2.

In step S403-C2, M adjacent point(s) are selected from N-K adjacent point(s) as M target adjacent point(s) of the target point, where the N-K adjacent point(s) are adjacent point(s) other than the K first adjacent points among the N adjacent points.

The step S403-C2 may be implemented through, but is not limited to, following manners.

In a first manner, the M adjacent point(s) are randomly selected from the N-K adjacent point(s), which are other than the K first adjacent points among the N adjacent points, as the M target adjacent point(s) of the target point.

In a second manner, the M adjacent point(s) closest to the target point are selected from the N-K adjacent point(s) as the M target adjacent point(s) of the target point, where the N-K adjacent point(s) are adjacent point(s) other than the K first adjacent points among the N adjacent points.

In a fourth implementation, the step S403 comprises step S403-D1.

In step S403-D1, overlapping point(s), which are identical to the target point in the attribute, among the M overlapping points serve as target adjacent point(s) of the target point, in a case that the target point is identical to the M overlapping points in the position.

In some embodiments, a total quantity of the target adjacent points of the target point is signaled in a coded stream which is subsequently formed.

In some embodiments, in a case that a total quantity of the target adjacent points of the target point, which is determined as above, is smaller than K, the total quantity is signaled in a coded stream which is subsequently formed. In a case that the total quantity of target adjacent points of the target point is equal to K, the total quantity is not signaled in the coded stream. Correspondingly, when the decoding side does not acquire the total quantity of the target adjacent points of the target point when parsing the coded stream, the total quantity of target adjacent points of the target point is determined to be K by default.

Herein the one or more target adjacent points of the target point may be determined according to the M overlapping points through the foregoing means, and then step S404 is performed.

In step S404, an attribute of the target point is predicted according to a reconstructed attribute of the one or more target adjacent points.

In some embodiments, the attribute of the target point is a reflectivity, and a predicted reflectivity of the target point is determined as follows.

A reciprocal of the Manhattan distance between a target adjacent point and the target point serves as a weight of the target adjacent point. It is assumed that geometry coordinates of the target point are (xi, yi, zi) and the geometry coordinates of each target adjacent point are (xij, yij, zij), where j=1, 2, 3, ..., k. It is further assumed that the total quantity of the target adjacent points is K. Weights of the target adjacent points are determined according to the following equation (1).

$$w_{ij} = \frac{1}{\left|xi - xij\right| + \left|yi - yij\right| + \left|zi - zij\right|} \tag{1}$$

Optionally, for the reflectivity, different weights are used for directions x, y, and z, and the weights of the target adjacent points are determined according to the following equation (2).

$$w_{ij} = \frac{1}{a\left|xi - xij\right| + b\left|yi - yij\right| + c\left|zi - zij\right|} \tag{2}$$

a, b, and c are predetermined weights of the reflectivity in directions x, y, and z respectively. Optionally, a, b, and c may be obtained from a look-up table, or may be preset constants.

A predicted reflectivity $\widehat{Ai}$ of the target point is determined according to the following equation (3).

$$\widehat{Ai} = \frac{\sum\limits_{j=1}^{k} wij\widehat{Aij}}{\sum\limits_{j=1}^{k} wij} \tag{3}$$

$\widehat{Aij}$ is the reconstructed attribute of the target adjacent point. In a case that the total quantity of the target adjacent points of the target point is equal to K, there is j = 1, 2, ..., K.

In some embodiments, the attribute of the target point is the color. An example in which N = 6 is taken as an example. As shown in Figure 5D and Figure 5E, a certain range [j-searchRange, j-1] (where an index of the target point is j) of the encoded points is searched for adjacent points coplanar with the target point. In a case that an encoded adjacent point is found to be coplanar, a weight of such adjacent point is determined to be 2. The range of the encoded points is further searched for adjacent points that are collinear with the target point. In a case that an adjacent point in the set of the encoded points is found to be collinear, a weight of such adjacent point is determined to be 1.

Thereby, a weight is assigned to each target adjacent point of the target point. The reconstructed attributes of the target adjacent points are weighted according to the weights assigned to the target adjacent points to obtain a weighted average, so as to obtain a predicted color (i.e., a predicted attribute) of the target point.

Here the method for predicting the point-cloud attribute is provided. Different policies for selecting target adjacent points are provided during the prediction according to the distribution of the overlapping points, so as to determine the one or more target adjacent points of the target point. The attributed of the target point is predicted according to the reconstructed attribute of the one or more target adjacent points. Hence, the point-cloud attribute is predicted with higher efficiency.

In some embodiments, before the step S401, the method further comprises preprocessing and/or sorting on the overlapping points in the point-cloud data. The preprocessing may be implemented through, but is not limited to, following manners.

In a first manner, points identical in both the position and the attribute are removed from the point-cloud data. That is, overlapping points having identical attributes are removed from the point-cloud data.

In a second manner, Q points identical in the position and different in the attribute are acquired from the point-cloud data, where Q is a positive integer greater than or equal to 2. Q-1 point(s) among the Q points are removed from the point-cloud data, and a first point among the Q points is retained. The attribute of the first point is determined to be an average of the attributes of the Q points. In other words, only one point is retained among the overlapping points having different attributes, and the corresponding attribute value is calculated through, for example, arithmetic average.

In a third manner, point(s) which are identical to the target point in the position and different from the target point in the temporal information are removed from the point-cloud data. For example, the overlapping points are filtered according to other information such as a timestamp of the inputted point-cloud data, and the overlapping point(s) having the same timestamp as the target point are retained.

The sorting may be implemented through, but is not limited to, following manners.

In a first manner, the original input order is maintained.

In a second manner, the overlapping points are sorted according to an ascending or descending order of values of the attribute. When there are multiple attributes, the sorting is first performed according to values of a first attribute, and then performed according to values of the second attribute in case of identical values of the first attribute. A case of more attributes can be obtained by analogy. The first attribute may be a color, and the second attribute value may be a reflectivity. In case that multiple overlapping points have identical values with respect to one or more attributes, the overlapping points are sorted according to other candidate input information, or are not sorted at all.

In a third manner, the overlapping points are sorted according to an ascending or descending order of differences between the target point and the overlapping points, respectively, in the attribute.

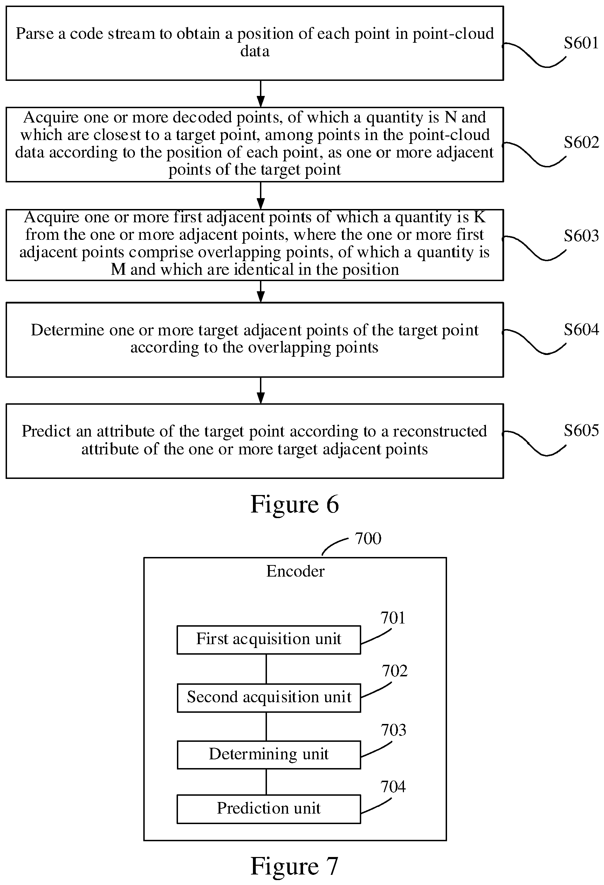

Hereinabove the encoding side is taken as an example for describing the method for predicting the point-cloud attribute. Hereinafter reference is made to Figure 6, where the decoding side is taken as an example. The method may be executed by a decoding device such as the foregoing decoding device 120.

Figure 6 is a flowchart of a method for predicting a point-cloud attribute according to another embodiment of the present disclosure. As shown in Figure 6, the method comprises the steps S601 to S605.

In step S601, a coded stream is parsed to obtain a position of each point in point-cloud data.

The decoder decodes the coded stream, where information on a position of a point cloud is first decoded, and then information on an attribute of the point cloud is decoded.

In step S602, one or more decoded points, of which a quantity is N and which are closest to a target point, are acquired among points in the point-cloud data according to the position of each point, as one or more adjacent points of the target point.

For example, a distance between the target point and each point is acquired according to the position of each point in the point-cloud data and the position of the target point, and the N decoded point(s) (i.e., the foregoing one or more decoded points) closest to the target point are acquired from the point-cloud data according to the distances as the N adjacent points of the target point.

Specific implementation of the step S602 may refer to details in the description concerning the step S401, and are not repeated herein.

In step S603, one or more first adjacent points of which a quantity is K are acquired from the one or more adjacent points, where the one or more first adjacent points comprise overlapping points, of which a quantity is M and which are identical in the position.

In an example, a distance between each of the N adjacent points and the target point is calculated according to the position of such adjacent point and the position of the target point, and K adjacent point(s) having with the smallest distances among the N adjacent point(s) serve the K first adjacent point(s) (i.e., the foregoing one or more first adjacent points).

Specific implementation of the step S603 may refer to details in the description concerning the step S402, and are not repeated herein.

In step S604, one or more target adjacent points of the target point is determined according to the overlapping points.

In this step, determining the one or more target adjacent points of the target point according to the M overlapping points (i.e., the foregoing overlapping points) may have, but is not limited to, following implementations.

In a first implementation, the step S604 comprises following steps S604-A1 and S604-A2.

In step S604-A1, a third adjacent point is determined from the M overlapping points.

In step S604-A2, the third adjacent point serves as one of the one or more target adjacent points of the target point.

The third adjacent point may be an arbitrary one of the M overlapping points. The positions of the M overlapping points are identical while the attributes thereof may be either identical or different. Hence, the attribute of the third adjacent point may be determined in following manners.

For example, an attribute of an arbitrary one of the M overlapping points serves as the attribute of the third adjacent point, or an average of the attributes of all the M overlapping points serves as the attribute of the third adjacent point.

Herein, in some embodiments, the video encoder may further determine K-M first adjacent point(s), which are other than the M overlapping points in the K first adjacent points, as K-M target adjacent point(s) of the target point. As the coded stream is parsed, a total quantity of the one or more target adjacent points of the target point carried may be signaled to be K-M+1 in the coded stream.

In some embodiments, the total quantity of the one or more target adjacent points of the target point is signaled to be K in the coded stream, or the total quantity of the target adjacent points of the target point is not signaled in the coded stream and the total quantity is inferred to be K by default. In such case, the method further comprises steps S604-A3 and S604-A4.

In step S604-A3, M-1 second adjacent point(s) is selected from the N adjacent points, where each second adjacent point is not comprised in the K first adjacent points.

In step S604-A4, the M-1 second adjacent point(s) serve as M-1 target adjacent point(s) of the target point.

The step S604-A3 may be implemented through, but is not limited to, following manners.

In a first manner, M-1 adjacent point(s) are randomly selected from the N-K adjacent point(s), which are other than the K first adjacent points among the N adjacent points, as the second adjacent point(s).

In a second manner, M-1 adjacent point(s) closest to the target point are selected from N-K adjacent point(s) as the M-1 second adjacent point(s), where the N-K adjacent point(s) are adjacent points other than the K first adjacent point(s) among the N adjacent points.

In a second implementation, each point in the point-cloud data has temporal information, and the step S604 comprises steps S604-B1 and S604-B2.

In step S604-B1, the coded stream is parsed to obtain the temporal information of the M overlapping points and of the target point.

In step S604-B2, P overlapping point(s) identical to the target point in the temporal information are selected from the M overlapping points as target adjacent point(s) of the target point, where P is a positive integer.

On a basis of the step S604-B2, in a case that the total quantity of the one or more target adjacent points of the target point is signaled to be K in the coded stream, or in a case that the total quantity of the target adjacent points of the target point is not signaled in the coded stream and the total quantity is inferred to be K by default, the method may further comprise S604-B3.

In step S604-B3, M-P fourth adjacent point(s) are selected from the N adjacent points as M-P target adjacent point(s) of the target point, where each fourth adjacent point is not comprised in the first adjacent point(s).

The step S604-B3 may be implemented through, but is not limited to, following manners.

In a first manner, M-P adjacent point(s) are randomly selected from N-K adjacent point(s) other than the K first adjacent points among the N adjacent points as the fourth adjacent point(s).

In a second manner 2, M-P adjacent point(s) closest to the target point are selected from N-K adjacent point(s) as the M-P fourth adjacent point(s), where the N-K adjacent point(s) are adjacent point(s) other than the K first adjacent points among the N adjacent points.

In a third implementation, the step S604 comprises step S604-C1.

In step S604-C1, first adjacent point(s) other than the M overlapping points among the K first adjacent points serve as K-M target adjacent point(s) of the target point. In other words, the M overlapping points are discarded.

On a basis of the step S604-C1, in a case that the total quantity of the one or more target adjacent points of the target point is signaled to be K in the coded stream, or in a case that the total quantity of the target adjacent points of the target point is not signaled in the coded stream and the total quantity is inferred to be K by default, the method may further comprise S604-C2.

In step S604-C2, M adjacent point(s) are selected from N-K adjacent point(s) as M target adjacent point(s) of the target point, where the N-K adjacent point(s) are adjacent point(s) other than the K first adjacent points among the N adjacent points.

The step S604-C2 may be implemented through, but is not limited to, following manners.

In a first manner, the M adjacent point(s) are randomly selected from the N-K adjacent point(s), which are other than the K first adjacent points among the N adjacent points, as the M target adjacent point(s) of the target point.

In a second manner, the M adjacent point(s) closest to the target point are selected from the N-K adjacent point(s) as the M target adjacent point(s) of the target point, where the N-K adjacent point(s) are adjacent point(s) other than the K first adjacent points among the N adjacent points.

In a fourth implementation, the step S604 comprises steps S604-D1 and S604-D2.

In step S604-D1, it is determined whether the target point is identical to the M overlapping points in the position.

In step S604-D2, overlapping point(s), which are identical to the target point in an attribute, among the M overlapping points serve as target adjacent point(s) of the target point, in a case that the target point is identical to the M overlapping points in the position.

The step S604-D1 may be implemented through, but is not limited to, following manners.

In a first manner, it is determined that the target point is identical to the M overlapping points in the position, in a case that a point in the M overlapping points has the same position as the target point. In other words, the target point is one of overlapping points.

In a second manner 2, it is determined that the target point is identical to the M overlapping points in the position, in a case that an overlapping flag of the target point is identical to the overlapping flag of the M overlapping points. Overlapping points of a same group corresponds to the same overlapping flag.

In a third manner, the coded stream is parsed to obtain the overlapping flag of a first overlapping point. It is determined that the target point is identical to the M overlapping points in the position, in a case that the position of the target point is identical to that of the first overlapping point. Specifically, the coded stream is parsed to obtain the overlapping flag of the first overlapping point, the first overlapping point is fetched according to its overlapping flag, and it is determined whether the position of the first overlapping point is identical to the position of the target point. In case of being identical, it is determined that the target point is one of overlapping point. In such manner, the first overlapping point may the first point among the M overlapping points.

In a fourth manner, since the overlapping points in the coded stream are successively arranged based on a sequence, the coded stream is parsed to obtain the overlapping flag of a first overlapping point and a quantity of overlapping points, and an overlapping set is acquired according to the first overlapping point and the quantity of overlapping points. It is determined that the target point is identical to the M overlapping points in the position, in a case that the target point belongs to the overlapping set. The M overlapping points may also belong to the overlapping set.

The overlapping flags and the quantity of overlapping points may be signaled in a sequence parameter set (SPS), a geometry parameter set (GPS), or attached information in an attribute parameter set (APS).

In some embodiments, the total quantity of the target adjacent points of the target point is signaled in the coded stream.

In some embodiments, in a case that the total quantity of the target adjacent points of the target point is signaled in the coded stream, the total quantity of the target adjacent points of the target point is inferred to be K.

Herein the one or more target adjacent points of the target point may be determined according to the M overlapping points through the foregoing means, and then step S605 is performed.

In step S605, an attribute of the target point is predicted according to a reconstructed attribute of the one or more target adjacent points.

N, K, and M each is a positive integer greater than or equal to 1.

Specific implementation of the step S605 may refer to details of the description concerning the step S404, and is not repeated herein.

The method 600 for predicting the point-cloud attribute is an inverse process of the method 400 for predicting the point-cloud attribute. A step in the method 600 may refer to the corresponding step in the method 400. Details are not repeated herein for brevity.

Hereinabove exemplary implementations of the present disclosure are described in detail in conjunction with the drawings. The present disclosure is not limited to specific details of the foregoing implementations. Various variants may be made on technical solutions of the present disclosure within a scope of the technical concept of the present disclosure, and shall all belong to the protection scope of the present disclosure. For example, specific technical features described in the foregoing embodiments may be combined in any suitable manner as long as there is no contradiction. Various possible combinations are not further illustrated herein for brevity. The various implementations may be combined without departing from the concept of the present disclosure, and such combinations shall also fall within the scope of the present disclosure.

Magnitude of sequential numbers of the foregoing steps does not indicate an execution sequence in the foregoing method embodiments. The steps shall be executed according to corresponding functions and an internal logic among the steps. The magnitude shall not be construed as any limitation on a process of implementing embodiments of the present disclosure.

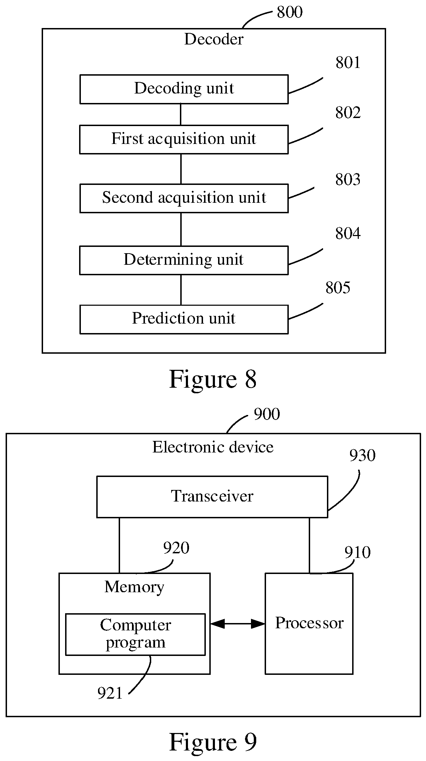

Hereinabove method embodiments of the present disclosure are described in details in conjunction with Figure 1 to Figure 6. Hereafter apparatus embodiments of the present disclosure are described in details in conjunction with Figure 7 and Figure 8.

Figure 7 is a schematic block diagram of an encoder according to an embodiment of the present disclosure.

As shown in Figure 7, the encoder 700 may include a first acquisition unit 701, a second acquisition unit 702, a determining unit 703, and a prediction unit 704.

The first acquisition unit 701 is configured to acquire one or more encoded points, of which a quantity is N and which are closest to a target point, among points in point-cloud data as one or more adjacent points of the target point.

The second acquisition unit 702 is configured to acquire one or more first adjacent points of which a quantity is K from the one or more adjacent points, where the one or more first adjacent points comprise overlapping points, of which a quantity is M and which are identical in a position.

The determining unit 703 is configured to determine one or more target adjacent points of the target point according to the overlapping points.

The prediction unit 704 is configured to predict an attribute of the target point according to a reconstructed attribute of the one or more target adjacent points.

N, K, and M each is a positive integer greater than or equal to 1.

In some embodiments, the determining unit 703 is configured to determine a third adjacent point from the overlapping points, and determine the third adjacent point to serve as one of the one or more target adjacent points.

In some embodiments, the determining unit 703 is further configured to determine the attribute of an arbitrary one of the overlapping points as the attribute of the third adjacent point, or determine an average of the attributes of all the overlapping points as the attribute of the third adjacent point.

In some embodiments, the determining unit 703 is further configured to determine the one or more first adjacent points other than the overlapping points as a part of the one or more target adjacent points.

In some embodiments, the determining unit 703 is further configured to select one or more second adjacent points of which a quantity is M-1 from the one or more adjacent points, where each of the one or more second adjacent points is not comprised in the one or more first adjacent point, and determine the one or more second adjacent points as another part of the one or more target adjacent points.

In some embodiments, the determining unit 703 is further configured to select at least one adjacent point, of which a quantity is M-1 and which is closest to the target point, among the one or more adjacent points other than the one or more first adjacent points, as the one or more second adjacent points.

In some embodiments, the determining unit 703 is configured to select at least one overlapping point, of which a quantity is P and which is identical to the target point in temporal information, from the overlapping points as at least one of the one or more target adjacent points, where P is a positive integer.

In some embodiments, the determining unit 703 is further configured to select one or more fourth adjacent points of which a quantity is M-P from the one or more adjacent points as another part of the one or more target adjacent points, where each of the one or more fourth adjacent points is not comprised in the one or more first adjacent points.

In some embodiments, the determining unit 703 is further configured to select at least one adjacent point, of which a quantity is M-P and is closest to the target point, among the one or more adjacent points other than the one or more first adjacent points, as the one or more fourth adjacent points.

In some embodiments, the determining unit 703 is configured to determine the one or more first adjacent points other than the overlapping points as a part of the one or more target adjacent points.

In some embodiments, the determining unit 703 is further configured to select at least one adjacent point, of which a quantity is M, among the one or more adjacent points other than the one or more first adjacent points, as another part of the one or more target adjacent points.

In some embodiments, the determining unit 703 is configured to determine at least one of the overlapping points, which is identical to the target point in the attribute, as at least one of the one or more target adjacent points, in a case that the target point is identical to the overlapping points in the position.

In some embodiments, the second acquisition unit 702 is configured to determine a distance between each of the one or more adjacent points and the target point according to the position of said adjacent point and the position of the target point, and determine at least one adjacent points, of which a quantity is K and which have smallest ones of the distances among the one or more adjacent points, as the one or more first adjacent points.

In some embodiments, the first acquisition unit 701 is further configured to acquire Q points which are identical in the position and different in the attribute from the point-cloud data, where Q is a positive integer greater than or equal to 2, and remove Q-1 points of the Q points from the point-cloud data, where a first point of the Q points is retained, and the attribute of the first point is an average of the attributes of the Q points.

In some embodiments, the first acquisition unit 701 is further configured to remove points which are identical in both the position and the attribute from the point-cloud data.

In some embodiments, the first acquisition unit 701 is further configured to remove points, which are identical to the target point in the position and different from the target point in temporal information, from the point-cloud data.

In some embodiments, the first acquisition unit 701 is further configured to sort overlapping points in the point-cloud data according to the attribute.

In some embodiments, the prediction unit 704 is further configured to generate an attribute coded stream, where a total quantity of the one or more target adjacent points is signaled in the attribute coded stream.

The apparatus embodiments may correspond to the method embodiments, and similar description thereof may refer to the method embodiments. Details are not repeated herein for brevity. Specifically, the apparatus 700 as shown in Figure 7 may execute the embodiment of the foregoing method 400, and the foregoing and other operations and/or functions of the modules in the apparatus 700 are configured to perform the method embodiments corresponding to the encoder. Details are not repeated herein for brevity.

Hereinabove the apparatus 700 is described from a perspective of functional modules in conjunction with the drawings. The functional modules may be implemented in a form of hardware, may be implemented through instructions in a form of software, or may be implemented through a combination of software and hardware. Specifically, the steps of the method embodiments may be implemented through a hardware integrated logical circuit in a processor, or through the instructions in the form of software. The steps of the methods according to embodiments of the present disclosure may be directly performed and implemented through a hardware encoding processor, or may be performed and completed through a combination of hardware and software modules in the encoding processor. Optionally, the software modules may be located in a conventional storage medium in the field, such as a random access memory, a flash memory, a read-only memory, a programmable read-only memory, an electrically-erasable programmable memory, or a register. The storage medium is located in a memory. The processor reads information in the memory and implements the steps of the foregoing method embodiments with help of hardware thereof.

Figure 8 is a schematic block diagram of a decoder according to an embodiment of the present disclosure.

As shown in Figure 8, the decoder 800 may comprise a decoding unit 801, a first acquisition unit 802, a second acquisition unit 803, a determining unit 804, and a prediction unit 805.

The decoding unit 801 is configured to parse a coded stream to obtain a position of each point in point-cloud data.

The first acquisition unit 802 is configured to acquire one or more decoded points, of which a quantity is N and which are closest to a target point, among points in the point-cloud data according to the position of each point in the point-cloud data, as one or more adjacent points of the target point.

The second acquisition unit 803 is configured to acquire one or more first adjacent points of which a quantity is K from the one or more adjacent points, where the one or more first adjacent points comprise overlapping points, of which a quantity is M and which are identical in the position.

The determining unit 804 is configured to determine one or more target adjacent points of the target point according to the overlapping points.

The prediction unit 805 is configured to predict an attribute of the target point according to a reconstructed attribute of the one or more target adjacent points.

N, K, and M each is a positive integer greater than or equal to 1.

In some embodiments, the determining unit 804 is configured to determine a third adjacent point from the overlapping points, and determine the third adjacent point to serve as one of the one or more target adjacent points.

In some embodiments, the determining unit 804 is further configured to determine the attribute of an arbitrary one of the overlapping points as the attribute of the third adjacent point, or determine an average of the attributes of all the overlapping points as the attribute of the third adjacent point.

In some embodiments, the determining unit 804 is further configured to determine the one or more first adjacent points other than the overlapping points as a part of the one or more target adjacent points.

In some embodiments, the determining unit 804 is further configured to select one or more second adjacent points of which a quantity is M-1 from the one or more adjacent points, where each of the one or more second adjacent point is not comprised in the one or more first adjacent point, and determine the one or more second adjacent points as another part of the one or more target adjacent points.

In some embodiments, the determining unit 804 is further configured to: select at least one adjacent point, of which a quantity is M-1 and which is closest to the target point, among the one or more adjacent points other than the one or more first adjacent points, as the one or more second adjacent points.

In some embodiments, the determining unit 804 is configured to parse the coded stream to obtain temporal information of the overlapping points and of the target point, and select at least one overlapping point, of which a quantity is P and which is identical to the target point in the temporal information, from the overlapping points as at least one of the one or more target adjacent points, where P is a positive integer.

In some embodiments, the determining unit 804 is further configured to select one or more fourth adjacent points of which a quantity is M-P from the one or more adjacent points as another part of the one or more target adjacent points, where each of the one or more fourth adjacent point is not comprised in the one or more first adjacent points.

In some embodiments, the determining unit 804 is configured to select at least one adjacent point, of which a quantity is M-P and is closest to the target point, among the one or more adjacent points other than the one or more first adjacent points, as the one or more fourth adjacent points.

In some embodiments, the determining unit 804 is configured to determine the one or more first adjacent points other than the overlapping points as a part of the one or more target adjacent points.

In some embodiments, the determining unit 804 is further configured to select at least one adjacent point, of which a quantity is M, among the one or more adjacent points other than the one or more first adjacent points, as another part of the one or more target adjacent points.

In some embodiments, the determining unit 804 is further configured to: determine whether the target point is identical to the overlapping points in the position, and determine at least one of the overlapping points, which is identical to the target point in the attribute, as at least one of the one or more target adjacent points, in a case that the target point is identical to the overlapping points in the position.

In some embodiments, the determining unit 804 is configured to determine that the target point is identical to the overlapping points in the position, in a case that there is a point, which is identical to the target point in the position, among the overlapping points. Alternatively, the determining unit 804 is configured to determine that the target point is identical to the overlapping points in the position, in a case that an overlapping flag of the target point is identical to the overlapping flag of the overlapping points. Alternatively, the determining unit 804 is configured to parse the coded stream to obtain an overlapping flag of a first overlapping point of the overlapping points, and determine that the target point is identical to the overlapping points in the position in a case that the target point is identical to the first overlapping point in the position. Alternatively, the determining unit 804 is configured to: parse the coded stream to obtain an overlapping flag of a first overlapping point of the overlapping points and a quantity of the overlapping points; acquire an overlapping set according to the first overlapping point and the quantity, where the overlapping points are successively arranged in the coded stream; and determine that the target point is identical to the overlapping points in the position in a case that the target point belongs to the overlapping set.

The apparatus embodiments may correspond to the method embodiments, and similar description thereof may refer to the method embodiments. Details are not repeated herein for brevity. Specifically, the apparatus 800 as shown in Figure 8 may execute the embodiment of the foregoing method 600, and the foregoing and other operations and/or functions of the modules in the apparatus 800 are configured to perform the method embodiments corresponding to the decoder. Details are not repeated herein for brevity.

Hereinabove the apparatus 800 is described from a perspective of functional modules in conjunction with the drawings. The functional modules may be implemented in a form of hardware, may be implemented through instructions in a form of software, or may be implemented through a combination of software and hardware. Specifically, the steps of the method embodiments may be implemented through a hardware integrated logical circuit in a processor, or through the instructions in the form of software. The steps of the methods according to embodiments of the present disclosure may be directly performed and implemented through a hardware decoding processor, or may be performed and completed through a combination of hardware and software modules in the decoding processor. Optionally, the software modules may be located in a conventional storage medium in the field, such as a random access memory, a flash memory, a read-only memory, a programmable read-only memory, an electrically-erasable programmable memory, or a register. The storage medium is located in a memory. The processor reads information in the memory and implements the steps of the foregoing method embodiments with help of hardware thereof.

Figure 9 is a schematic block diagram of an electronic device 900 according to an embodiment of the present disclosure. The electronic device as shown in Figure 9 may be the foregoing video encoder or the foregoing video decoder.

As shown in Figure 9, the electronic device 900 may comprise a memory 910 and a processor 920.

The memory 910 is configured to store a computer program 911, and transmit the computer program 911 to the processor 920. In other words, the processor 920 may invoke the computer program 911 from the memory 910 and execute the computer program to implement the method according to embodiments of the present disclosure.

For example, the processor 920 may be configured to perform the steps in the foregoing method 200 according to instructions in the computer program 911.

In some embodiments, the processor 920 may include, but is not limited to a general purpose processor, a digital signal processor (DSP), an application-specific integrated circuit (ASIC), a field-programmable gate array (FPGA) or another programmable logic device, a discrete gate or a transistor logic device, or a discrete hardware component.

In some embodiments, the memory 910 includes, but is not limited to a volatile memory and/or a non-volatile memory.

The non-volatile memory may be a read-only memory (ROM), a programmable ROM (PROM), an erasable programmable read-only memory (EPROM), an electrically EPROM (EEPROM), or a flash memory. The volatile memory may be a random access memory (RAM), and serves as an external cache. As an example rather than a limitation, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM) and a direct rambus random access memory (DR RAM).

In some embodiments, the computer program 911 may be divided into one or more modules, and the one or more modules are stored in the memory 910 and are executed by the processor 920 to implement the method according to embodiments of the present disclosure. The one or more modules may be a series of instruction segments of a computer program, which are capable of implementing specific functions, and the instruction segments are configured to represent a process of executing the computer program 911 in the electronic device 900.

As shown in Figure 9, the electronic device 900 may further comprises a transceiver 930.

The transceiver 930 may be connected to the processor 920 or the memory 910.

The processor 920 may control the transceiver 930 to communicate with another device, and specifically may send information or data to the other device or receive information or data sent by the other device. The transceiver 930 may comprise a transmitter and a receiver. The transceiver 930 may further comprise an antenna, and a quantity of the antenna may be one or more.

Components in the electronic device 900 are connected via a bus system. Besides a data bus, the bus system may further include a power bus, a control bus, or a status signal bus.

In an aspect, a computer storage medium is provided according to embodiments of the present disclosure. The computer storage medium stores a computer program, and the computer program when executed by a computer causes the computer to perform the method in the foregoing method embodiments. Alternatively, a computer program product comprising instructions is provided according to an embodiment of the present disclosure. The instructions when executed by a computer cause the computer to perform the method in the foregoing method embodiments.

In another aspect, a computer program product or a computer program is provided according to embodiments of the present disclosure. The computer program product or the computer program comprises computer instructions, and the computer instructions are stored in a computer-readable storage medium. A processor of a computer device reads the computer instructions from the computer-readable storage medium and executes the computer instructions to cause the computer device to perform the method in the foregoing method embodiments.

In other words, when an embodiment is implemented through software, the embodiment may be implemented completely or partially in a form of a computer program product. The computer program product comprises one or more computer instructions. When the computer program instructions are loaded and executed on the computer, the processes or functions according to embodiments of the present disclosure are wholly or partially implemented. The computer may be a general-purpose computer, a special-purpose computer, a computer network, or another programmable apparatus. The computer instructions may be stored in a computer-readable storage medium, or transmitted from a computer-readable storage medium to another computer-readable storage medium. For example, the computer instructions may be transmitted from a website, a computer, a server, or a data center to another website, another computer, another server, or another data center in a wired manner (for example, via a coaxial cable, an optical fiber, or a digital subscriber line (DSL)) or a wireless manner (for example, via infrared, radio wave, or microwave). The computer-readable storage medium may be any medium applicable to and accessible by a computer, or a data storage device, such as a server or a data center, integrating one or more applicable media. The applicable medium may be a magnetic medium (for example, a floppy disk, a hard disk, or a tape), an optical medium (for example, a digital video disc (DVD)), or a semi-conductive medium (for example, a solid state disk (SSD)).

Those skilled in the art can appreciate that the exemplary modules and algorithm steps described according to embodiments of the present disclosure may be implemented in electronic hardware, or a combination of computer software and electronic hardware. Whether the functions are executed in a manner of hardware or software depends on a particular application and a constraint condition of design in technical solutions. Those skilled in the art may use different means to implement the described functions for each particular application, and such implementation should be considered as not exceeding the scope of the present disclosure.

In the several embodiments of the present disclosure, a system, an apparatus, and a method that is disclosed may be implemented in other manners. For example, the described apparatus embodiments are merely examples. For example, division of the modules is merely based on logical functions, and there may be another manner of division manners in practical applications. For example, multiple modules or components may be combined or integrated into another system, or some features may be ignored or not performed. In addition, the displayed or discussed mutual couplings, direct couplings, communication connections may be implemented by using some interfaces. The indirect couplings or communication connections between apparatuses or modules may be electronic, mechanical, or in another form.

The modules described as separate components may or may not be physically separated, and the components displayed as modules may or may not be physical modules, i.e., may be located in one place or may be distributed over multiple network units. Some or all of the modules may be selected according to actual requirements to implement the objectives of the solutions of the embodiments. For example, functional modules in the embodiments of the present disclosure may be integrated into one processing module, or each of the modules may exist alone physically, or two or more modules may be integrated into one module.

The foregoing descriptions are merely specific implementations of the present disclosure, but are not intended to limit the protection scope of the present disclosure. Those skilled in the art may readily make variations or replacements within a technical scope disclosed in the present disclosure, and such variations or replacements shall fall within a protection scope of the present disclosure. Therefore, the protection scope of the present disclosure shall be subject to the protection scope of the claims.

**Claims**

1. A method for predicting a point-cloud attribute, executable by an encoding device, wherein the method comprises:

   acquiring one or more encoded points, of which a quantity is N and which are closest to a target point, among points in point-cloud data as one or more adjacent points of the target point, wherein the target point is one of the points in the point-cloud data;
   acquiring one or more first adjacent points of which a quantity is K from the one or more adjacent points, wherein the one or more first adjacent points comprise overlapping points, of which a quantity is M and which are identical in a position;
   determining one or more target adjacent points of the target point according to the overlapping points; and
   predicting an attribute of the target point according to a reconstructed attribute of the one or more target adjacent points;
   wherein N, K, and M each is a positive integer greater than or equal to 1.

2. The method according to claim 1, wherein determining the one or more target adjacent points of the target point according to the overlapping points comprises:

   determining a third adjacent point from the overlapping points, and
   determining the third adjacent point to serve as one of the one or more target adjacent points.

3. The method according to claim 2, further comprising:

   determining the attribute of an arbitrary one of the overlapping points as the attribute of the third adjacent point, or
   determining an average of the attributes of all the overlapping points as the attribute of the third adjacent point.

4. The method according to claim 1, further comprising:
   determining the one or more first adjacent points other than the overlapping points as a part of the one or more target adjacent points.

5. The method according to claim 2, further comprising:

   selecting one or more second adjacent points of which a quantity is M-1 from the one or more adjacent points, wherein each of the one or more second adjacent points is not comprised in the one or more first adjacent point, and
   determining the one or more second adjacent points as another part of the one or more target adjacent points.

6. The method according to claim 5, wherein selecting the one or more second adjacent points of which the quantity is M-1 from the one or more adjacent points comprises:
   selecting at least one adjacent point, of which a quantity is M-1 and which is closest to the target point, among the one or more adjacent points other than the one or more first adjacent points, as the one or more second adjacent points.

7. The method according to claim 1, wherein determining the one or more target adjacent points of the target point according to the overlapping points comprises:
   selecting at least one overlapping point, of which a quantity is P and which is identical to the target point in temporal information, from the overlapping points as at least one of the one or more target adjacent points, wherein P is a positive integer.

8. The method according to claim 7, further comprising:
   select one or more fourth adjacent points of which a quantity is M-P from the one or more adjacent points as another part of the one or more target adjacent points, wherein each of the one or more fourth adjacent points is not comprised in the one or more first adjacent points.

9. The method according to claim 8, wherein select the one or more fourth adjacent points of which the quantity is M-P from the one or more adjacent points comprises:
selecting at least one adjacent point, of which a quantity is M-P and is closest to the target point, among the one or more adjacent points other than the one or more first adjacent points, as the one or more fourth adjacent points.

10. The method according to claim 4, further comprising:
selecting at least one adjacent point, of which a quantity is M, among the one or more adjacent points other than the one or more first adjacent points, as another part of the one or more target adjacent points.

11. The method according to any one of claims 1 to 10, wherein determining the one or more target adjacent points of the target point according to the overlapping points comprises:
determining at least one of the overlapping points, which is identical to the target point in the attribute, as at least one of the one or more target adjacent points, in a case that the target point is identical to the overlapping points in the position.

12. The method according to any one of claims 1 to 10, wherein acquiring the one or more first adjacent points of which the quantity is K from the one or more adjacent points comprises:

determining a distance between each of the one or more adjacent points and the target point according to the position of said adjacent point and the position of the target point, and
determining least one adjacent points, of which a quantity is K and which have smallest ones of the distances among the one or more adjacent points, as the one or more first adjacent points.

13. The method according to any one of claims 1 to 10, wherein before acquiring the one or more encoded points, of which the quantity is N and which are closest to the target point, among the points in the point-cloud data, the method further comprises:
acquiring Q points which are identical in the position and different in the attribute from the point-cloud data, wherein Q is a positive integer greater than or equal to 2; and removing Q-1 points of the Q points from the point-cloud data, wherein a first point of the Q points is retained, and the attribute of the first point is an average of the attributes of the Q points.

14. The method according to any one of claims 1 to 10, wherein before acquiring the one or more encoded points, of which the quantity is N and which are closest to the target point, among the points in the point-cloud data, the method further comprises:
removing points which are identical in both the position and the attribute from the point-cloud data.

15. The method according to any one of claims 1 to 10, wherein before acquiring the one or more encoded points, of which the quantity is N and which are closest to the target point, among the points in the point-cloud data, the method further comprises:
removing points, which are identical to the target point in the position and different from the target point in temporal information, from the point-cloud data.

16. The method according to any one of claims 1 to 10, wherein before acquiring the one or more encoded points, of which the quantity is N and which are closest to the target point, among the points in the point-cloud data, the method further comprises:
sorting the overlapping points in the point-cloud data according to the attribute.

17. The method according to any one of claims 1 to 10, further comprising:
generating an attribute coded stream, wherein a total quantity of the one or more target adjacent points is signaled in the attribute coded stream.

18. A method for predicting a point-cloud attribute, executable by a decoding device, wherein the method comprises:

parsing a coded stream to obtain a position of each point in point-cloud data;
acquiring one or more decoded points, of which a quantity is N and which are closest to a target point, among points in the point-cloud data according to the position of each point in the point-cloud data, as one or more adjacent points of the target point;
acquiring one or more first adjacent points of which a quantity is K from the one or more adjacent points, wherein the one or more first adjacent points comprise overlapping points, of which a quantity is M and which are identical in the position;

determining one or more target adjacent points of the target point according to the overlapping points; and

predicting an attribute of the target point according to a reconstructed attribute of the one or more target adjacent points;

wherein N, K, and M each is a positive integer greater than or equal to 1.

19. The method according to claim 18, wherein determining the one or more target adjacent points of the target point according to the overlapping points comprises:

determining a third adjacent point from the overlapping points, and

determining the third adjacent point to serve as one of the one or more target adjacent points.

20. The method according to claim 19, further comprising:

determining the attribute of an arbitrary one of the overlapping points as the attribute of the third adjacent point, or determining an average of the attributes of all the overlapping points as the attribute of the third adjacent point.

21. The method according to claim 18, further comprising:

determining the one or more first adjacent points other than the overlapping points as a part of the one or more target adjacent points.

22. The method according to claim 19, further comprising:

selecting one or more second adjacent points of which a quantity is M-1 from the one or more adjacent points, wherein each of the one or more second adjacent point is not comprised in the one or more first adjacent point, and determining the one or more second adjacent points as another part of the one or more target adjacent points.

23. The method according to claim 22, wherein selecting the one or more second adjacent points of which the quantity is M-1 from the one or more adjacent points comprises:

selecting at least one adjacent point, of which a quantity is M-1 and which is closest to the target point, among the one or more adjacent points other than the one or more first adjacent points, as the one or more second adjacent points.

24. The method according to claim 18, wherein determining the one or more target adjacent points of the target point according to the overlapping points comprises:

parsing the coded stream to obtain temporal information of the overlapping points and of the target point, and selecting at least one overlapping point, of which a quantity is P and which is identical to the target point in the temporal information, from the overlapping points as at least one of the one or more target adjacent points, wherein P is a positive integer.

25. The method according to claim 24, further comprising:

selecting one or more fourth adjacent points of which a quantity is M-P from the one or more adjacent points as another part of the one or more target adjacent points, wherein each of the one or more fourth adjacent point is not comprised in the one or more first adjacent points.

26. The method according to claim 25, wherein selecting the one or more fourth adjacent points of which the quantity is M-P from the one or more adjacent points comprises:

select at least one adjacent point, of which a quantity is M-P and is closest to the target point, among the one or more adjacent points other than the one or more first adjacent points, as the one or more fourth adjacent points.

27. The method according to claim 21, further comprising:

selecting at least one adjacent point, of which a quantity is M, among the one or more adjacent points other than the one or more first adjacent points, as another part of the one or more target adjacent points.

28. The method according to any one of claims 18 to 27, further comprising:

determining whether the target point is identical to the overlapping points in the position, and

determining at least one of the overlapping points, which is identical to the target point in the attribute, as at least one of the one or more target adjacent points, in a case that the target point is identical to the overlapping points in the position.

29. The method according to claim 28, wherein determining whether the target point is identical to the overlapping points in the position comprises at least one of:

determining that the target point is identical to the overlapping points in the position, in a case that there is a point, which is identical to the target point in the position, among the overlapping points;

determining that the target point is identical to the overlapping points in the position, in a case that an overlapping flag of the target point is identical to the overlapping flag of the overlapping points;

parsing the coded stream to obtain an overlapping flag of a first overlapping point of the overlapping points, and determining that the target point is identical to the overlapping points in the position in a case that the target point is identical to the first overlapping point in the position; or

parsing the coded stream to obtain an overlapping flag of a first overlapping point of the overlapping points and a quantity of the overlapping points; acquiring an overlapping set according to the first overlapping point and the quantity, wherein the overlapping points are successively arranged in the coded stream; and determining that the target point is identical to the overlapping points in the position in a case that the target point belongs to the overlapping set.

30. An encoder, comprising:

a first acquisition unit, configured to acquire one or more encoded points, of which a quantity is N and which are closest to a target point, among points in point-cloud data as one or more adjacent points of the target point, wherein the target point is one of the points in the point-cloud data;

a second acquisition unit, configured to acquire one or more first adjacent points of which a quantity is K from the one or more adjacent points, wherein the one or more first adjacent points comprise overlapping points, of which a quantity is M and which are identical in a position;

a determining unit, configured to determine one or more target adjacent points of the target point according to the overlapping points; and

a prediction unit, configured to predict an attribute of the target point according to a reconstructed attribute of the one or more target adjacent points;

wherein N, K, and M each is a positive integer greater than or equal to 1.

31. A decoder, comprising:

a decoding unit, configured to parse a coded stream to obtain a position of each point in point-cloud data;

a first acquisition unit, configured to acquire one or more decoded points, of which a quantity is N and which are closest to a target point, among points in the point-cloud data according to the position of each point in the point-cloud data, as one or more adjacent points of the target point;

a second acquisition unit, configured to acquire one or more first adjacent points of which a quantity is K from the one or more adjacent points, wherein the one or more first adjacent points comprise overlapping points, of which a quantity is M and which are identical in the position;

a determining unit, configured to determine one or more target adjacent points of the target point according to the overlapping points; and

a prediction unit, configured to predict an attribute of the target point according to a reconstructed attribute of the one or more target adjacent points;

wherein N, K, and M each is a positive integer greater than or equal to 1.

32. An electronic device, comprising a processor and a memory, wherein:

the memory is configured to store a computer program, and

the processor is configured to invoke and execute the computer program stored in the memory to perform the method according to any one of claims 1 to 17, or the method according to any one of claims 18 to 29.

33. A computer-readable storage medium, configured to store a computer program, wherein:
the computer program is configured to cause a computer to perform the method according to any one of claims 1 to 17, or the method according to any one of claims 18 to 29.

**34.** A computer program product, comprising instructions, wherein:
the instructions when executed by a computer causes the computer to perform the method according to any one of claims 1 to 17, or the method according to any one of claims 18 to 29.

## Encoding device 110

| Video source 111 | → | Video encoder 112 | → | Output interface 113 |

— 130

## Decoding device 120

| Display apparatus 123 | → | Video decoder 122 | → | Input interface 121 |

## Figure 1

**200**

Geometry position

Attribute information

201 — Coordinate translation and coordinate quantization unit

Space transformation unit — 210

202 — Octree construction unit

203 — Octree reconstruction unit

Attribute interpolation unit — 211

Attribute prediction unit — 212

Residual quantization unit — 213

204 — Entropy encoding unit

Entropy encoding unit — 214

Geometry code stream

Attribute code stream

## Figure 2

300

Geometry
code stream

Attribute
code stream

| Entropy decoding unit | Entropy decoding unit |
| --- | --- |
301 | | 310

| Octree reconstruction unit | Inverse quantization unit |
| --- | --- |
302 | | 311

| Inverse coordinate quantization unit | Attribute reconstruction unit |
| --- | --- |
303 | | 312

| Inverse coordinate translation unit | Inverse space transformation unit |
| --- | --- |
304 | | 313

Geometry
position

Attribute
information

Figure 3

Acquire one or more encoded points, of which a quantity is N and which are closest to a target point, among points in point-cloud data as one or more adjacent points of the target point — S401

Acquire one or more first adjacent points of which a quantity is K from the one or more adjacent points, where the one or more first adjacent points comprises overlapping points, of which a quantity is M and which are identical in a position — S402

Determine one or more target adjacent points of the target point according to the overlapping points — S403

Predict an attribute of the target point according to a reconstructed attribute of the one or more target adjacent points — S404

Figure 4

Figure 5A

Figure 5B

Figure 5C

Figure 5D

Figure 5E

| Parse a code stream to obtain a position of each point in point-cloud data | S601 |

↓

| Acquire one or more decoded points, of which a quantity is N and which are closest to a target point, among points in the point-cloud data according to the position of each point, as one or more adjacent points of the target point | S602 |

↓

| Acquire one or more first adjacent points of which a quantity is K from the one or more adjacent points, where the one or more first adjacent points comprise overlapping points, of which a quantity is M and which are identical in the position | S603 |

↓

| Determine one or more target adjacent points of the target point according to the overlapping points | S604 |

↓

| Predict an attribute of the target point according to a reconstructed attribute of the one or more target adjacent points | S605 |

## Figure 6

700

Encoder

First acquisition unit — 701

Second acquisition unit — 702

Determining unit — 703

Prediction unit — 704

## Figure 7

Decoder 800

Decoding unit — 801

First acquisition unit — 802

Second acquisition unit — 803

Determining unit — 804

Prediction unit — 805

Figure 8

Electronic device 900

Transceiver — 930

Memory — 920

Computer program — 921

Processor — 910

Figure 9

## INTERNATIONAL SEARCH REPORT

| International application No. |
|---|
| **PCT/CN2021/131346** |

| | |
|---|---|
| **A.** | **CLASSIFICATION OF SUBJECT MATTER** |
| | H04N 19/597(2014.01)i; G06T 9/00(2006.01)i |

According to International Patent Classification (IPC) or to both national classification and IPC

| | |
|---|---|
| **B.** | **FIELDS SEARCHED** |

Minimum documentation searched (classification system followed by classification symbols)

H04N, G06T

Documentation searched other than minimum documentation to the extent that such documents are included in the fields searched

Electronic data base consulted during the international search (name of data base and, where practicable, search terms used)

CNTXT; CNKI; ENTXT; USTXT; WOTXT; BING: 属性, 点云, 距离, 相邻, 重复, 预测, 重建, 点, 位置, point 1w cloud, distance, neighbor+, attribut+, reconstruct+, predict+, repetition, repeat, point, position

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 110996098 A (TENCENT AMERICA L.L.C.) 10 April 2020 (2020-04-10) description paragraphs 30-208 | 1-6, 10, 12, 14, 15, 17-23, 26, 27, 30-34 |
| A | CN 110418135 A (PEKING UNIVERSITY SHENZHEN GRADUATE SCHOOL) 05 November 2019 (2019-11-05) entire document | 1-34 |
| A | US 2019081638 A1 (APPLE INC.) 14 March 2019 (2019-03-14) entire document | 1-34 |
| A | WO 2020075781 A1 (PANASONIC INTELLECTUAL PROPERTY CORPORATION OF AMERICA) 16 April 2020 (2020-04-16) entire document | 1-34 |
| A | US 2020304823 A1 (TENCENT AMERICA LLC.) 24 September 2020 (2020-09-24) entire document | 1-34 |
| A | WO 2020190090 A1 (LG ELECTRONICS INC.) 24 September 2020 (2020-09-24) entire document | 1-34 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2022** | **26 January 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/131346**

| Patent document cited in search report | | | Publication date (day/month/year) | Patent family member(s) | | | Publication date (day/month/year) |
|---|---|---|---|---|---|---|---|
| CN | 110996098 | A | 10 April 2020 | US | 2020105025 | A1 | 02 April 2020 |
| | | | | US | 11010931 | B2 | 18 May 2021 |
| CN | 110418135 | A | 05 November 2019 | WO | 2021022621 | A1 | 11 February 2021 |
| US | 2019081638 | A1 | 14 March 2019 | US | 2021119640 | A1 | 22 April 2021 |
| | | | | US | 10897269 | B2 | 19 January 2021 |
| WO | 2020075781 | A1 | 16 April 2020 | EP | 3866115 | A1 | 18 August 2021 |
| | | | | BR | 112021006535 | A2 | 06 July 2021 |
| | | | | US | 2021142521 | A1 | 13 May 2021 |
| | | | | KR | 20210070991 | A | 15 June 2021 |
| | | | | JP | WO2020075781 | A1 | 30 September 2021 |
| | | | | IN | 202147015549 | A | 16 April 2021 |
| US | 2020304823 | A1 | 24 September 2020 | EP | 3871420 | A1 | 01 September 2021 |
| | | | | WO | 2020191260 | A1 | 24 September 2020 |
| | | | | US | 10979730 | B2 | 13 April 2021 |
| | | | | CN | 113475083 | A | 01 October 2021 |
| WO | 2020190090 | A1 | 24 September 2020 | | None | | |

Form PCT/ISA/210 (patent family annex) (January 2015)

**EP 4 258 671 A1**

**REFERENCES CITED IN THE DESCRIPTION**

**Patent documents cited in the description**

- CN 202011439503